# EUROPEAN PATENT APPLICATION

(11) **EP 4 837 419 A1**
(43) Date of publication of application: **11.11.2026**
(21) Application number: 25315156.7
(22) Date of filing: 05.05.2025
(51) Int. Cl.: A01N 25/02, A01N 25/24, A01N 25/30, A01N 57/20, A01P 13/00

(54) **ADJUVANT COMPOSITIONS FOR HIGH-LOAD HERBICIDAL COMPOSITIONS**

(71) Applicant: SPECIALTY OPERATIONS FRANCE, 69003 Lyon (FR)
(72) Inventor: Adeleye, Adegboyega Isaac, Bristol, PA 19007-3624 (US); Sanganwar, Ganesh, Bristol, PA 19007-3624 (US); Zavgorodnya, Oleksandra, Bristol, PA 19007-3624 (US)
(74) Representative: Delenne, Marc

(57) **Abstract**

The present invention provides an adjuvant composition for herbicides, said composition comprising:
a) at least one surfactant chosen from betaine compounds,
b) at least one choline salt,
c) at least one polyol compound, and
d) optionally, a liquid medium.

## Description

### FIELD OF THE INVENTION

The present invention provides an adjuvant composition for herbicides, notably for glufosinate herbicides such as ammonium glufosinate. The invention also relates to an herbicidal composition comprising at least one herbicide and at least one adjuvant composition according to the invention. The invention further concerns different uses of said adjuvant composition and/or herbicidal composition in agrochemical (agriculture) domain.

### BACKGROUND OF THE INVENTION

Herbicidally active compositions are known and are commercially available in different forms. Among them, glufosinate compositions are available mainly in the form of ammonium or potassium salts (or even as other salts). Herbicidal compositions are generally applied to weeds and unwanted vegetation in the form of an aqueous formulation containing a variety of adjuvants including for example wetting agents, surfactants, dispersants, anti-foam agents, humectants, and the like. The activity of these herbicide compositions may be improved considerably by the careful choice of additives.

There is a desire to have compositions with higher active ingredient concentrations (notably with a higher glufosinate concentration), as the end-user (e.g., farmer) can modify the use concentration (amount of active applied to the field) by adjusting the dilution rate. Further, it avoids handling much product (the higher the concentration is, the lower the weight is for example).

Concentrated compositions typically comprise a high amount of active ingredient(s) (notably of glufosinate), water, and at least one surfactant useful as a formulation aid (dispersion, dissolution and/or stability of the active ingredient(s) in water), and/or as a biological activator (for example increasing the efficacy of the active ingredient(s), for example by encouraging wetting of a weed to be eliminated, or by encouraging penetration of the active ingredient(s) into the weed). The relative amounts of active ingredient(s), surfactant(s) and optionally further ingredients affect the rheological properties of the formulation (for example viscosity, or ability to be spread). The rheological properties of the formulation as such or upon dilution are important for handling and spreading purpose.

Where the concentration of active ingredient (notably of glufosinate) is high, crystallization is often a significant problem. Crystallization can occur at different temperatures, at different concentrations, or even when diluting with water, but the most problematic is when stored at low temperatures. Crystallization is characterized by the formation of small solid particles comprising said active ingredient (notably glufosinate). These small particles can have the bad impact of filters clogging, nozzles clogging, creating unnecessary hazardous waste problems to dispose of the crystals, loss of activity (bioefficacy), and/or bad repartition of the active on the field.

High load compositions are also associated with problems of compatibility of the surfactants, that may typically lead to separation issues, foaming issues (notably during pouring and/or dilution) and/or even higher driftable fines. It is thus difficult for the formulator to reach highly-concentrated herbicidal compositions, that are stable over storage (in particular under severe conditions) and that is fully satisfactory for the final user, notably in terms of foaming and drift control.

Therefore, there is a need for new adjuvant compositions that allow the preparations of high loaded herbicidal compositions (notably of high loaded glufosinate herbicidal compositions), typically of herbicidal compositions with a load of greater than or equal to 280 g/L, preferably of greater than or equal to 350 g/L, more preferably of greater than or equal to 400 g/L, typically of greater than or equal to 420 g/L.

More particularly, there is a need for new adjuvant compositions that allow the preparations of high loaded herbicidal compositions (notably of high loaded glufosinate herbicidal compositions) while having good rheological properties as such and/or upon dilution.

Even more particularly, there is a need for new adjuvant compositions that allow the preparations of high loaded herbicidal compositions (notably of high loaded glufosinate herbicidal compositions) while having at least one of the following feature: low and high temperature stability ; lower cost ; better ecotoxic profile ; better viscosity profile and stability, especially at lower temperature and during freeze-though cycles, and/or by avoiding crystallization ; reduced foamability ; increased drift control, while keeping an acceptable efficacy or equivalent efficacy or even improving efficacy.

There is a continuing interest in agricultural pesticide compositions, more particularly agricultural herbicides compositions, which exhibit improved properties.

### SUMMARY OF THE INVENTION

The invention relates to an adjuvant composition for herbicides, said composition comprising:
a) at least one surfactant chosen from betaine compounds, preferably from carboxybetaine compounds, sulfobetaines compounds and mixtures thereof, more preferably from carboxybetaine compounds,
b) at least one choline salt,
c) at least one polyol compound, and
d) optionally, a liquid medium.

Preferably, surfactant a) is chosen from carboxybetaine compounds, preferably from alkyl dimethyl betaine compounds, more preferably from (C4-C32)-alkyl dimethyl betaine compounds, even more preferably from (C4-C32)-alkyl dimethyl betaine compounds

More preferably, the surfactant a) is a mixture of lauryl dimethyl betaine and myristyl dimethyl betaine.

Advantageously, the choline salt is chosen from the group consisting of: choline chloride, choline carbonate, choline sulfate, choline citrate, choline acrylates, choline carboxylates, choline phosphonates, tricholine citrate, tricholine phosphate, choline dihydrogen citrate, choline bitartrate and any mixtures thereof, preferably is choline chloride.

Preferably, the poyol compound is chosen the group consisting of: alkanediols, cycloalkanediols, aromatic diols, unsaturated diols, saccharides and polysaccharides, polyalkylene glycol polymers and mixtures thereof.

According to an embodiment, the polyol is chosen from alkanediols, preferably from the group consisting of: ethylene glycol, propylene glycol, 1,3-propanediol and mixtures thereof.

According to another embodiment, the polyol is chosen from polyalkylene glycols, preferably from polyethelene glycols. Preferably, still according to this embodiment, the polyol is selected from polyethylene glycol polymers with a weight-average molecular weight superior or equal to 160 g.mol⁻¹.

Advantageously, the adjuvant composition comprises from 50% to 80% by weight of betaine surfactant(s), with respect to the total weight of the adjuvant composition, preferably from 52.5% to 77.5% by weight, more preferably from 55% to 75% by weight.

Advantageously, the adjuvant composition comprises from 5% to 30% by weight of choline salt(s), with respect to the total weight of the adjuvant composition, preferably from 7.5% to 25% by weight, more preferably from 8% to 22.5% by weight.

Advantageously, the adjuvant composition comprises from 5% to 30% by weight of polyol(s), with respect to the total weight of the adjuvant composition, preferably from 5% to 25% by weight, more preferably from 7.5% to 22.5% by weight.

The invention also relates to an herbicidal composition comprising:
- at least one herbicide,
- at least one adjuvant composition as defined above and described in more details hereafter, and
- optionally, a liquid medium.

Preferably, the herbicide is chosen from aminophosphate or aminophosphonate ammonium salts, preferably from ammonium glyphosate or glufosinate salts, more preferably from ammonium glufosinate salts.

According to an embodiment, the herbicide is present in the herbicidal composition of the invention at equal or greater than 280 g/L, preferably at equal or greater than 350 g/L, more preferably at equal or greater than 400 g/L, typically at equal or greater than 420 g/L.

The invention further relates to a method of preparing a herbicidal composition of the invention, said method comprising putting in contact and mixing at least one herbicide, at least one adjuvant composition as defined above and described in more details hereafter, and optionally a liquid medium.

The invention also relates to the use in agrochemicals of an adjuvant composition as defined above and described in more details hereafter.

Preferably, the adjuvant composition as defined above and described in more details hereafter is used:
- to increase the activity of an agriculturally active ingredient and/or to reduce the use rate of an agriculturally active ingredient, and/or
- to increase the wettability of an agriculturally active ingredient and/or increase the penetrability of an agricultural active ingredient

The invention finally concerns a method for regulating plant growth comprising contacting a herbicidal composition as defined above and described in more details hereafter with a plant.

The inventors have surprisingly discovered that the adjuvant compositions of the invention (as defined above and as described in more details below) are homogenous and stable over storage, notably at ambient temperature but also after 2 weeks of storage under severe conditions (no color change, no crystallization, ...). In particular, the adjuvant compositions of the invention are stable over at least 2 weeks of storage at low temperatures (typically at -16°C), and at high temperatures (typically at up to 54°C). Further, the adjuvant compositions of the invention have a good viscosity from low temperatures (typically from at least -16°C) to high temperatures (typically up to 54°C).

The adjuvant compositions of the invention are advantageous in that, when combined with an herbicide active ingredient (notably as defined below), they allow the preparation of highly concentrated herbicidal compositions, preferably with a loading up to at least 480 g/L of active ingredient (notably of glufosinate). The herbicidal compositions thus obtained are homogenous and stable over storage, notably at ambient temperature but also after 2 weeks of storage under severe conditions (no color change, no crystallization, ...). Further, the herbicidal compositions keep a convenient viscosity profile from low to high temperatures. The herbicidal compositions of the inventions are also advantageous in that they keep a low foamability (during pouring and/or dilution) and good drift control properties, despite the high concentration of active ingredients. The herbicidal compositions of the invention thus allow significantly reducing the use rate of herbicidal compositions by offering more concentrated formulations.

### DETAILED DESCRIPTION

In the present application, unless otherwise indicated, any specific embodiment or technical feature relating to a subject-matter is applicable to another embodiment or technical feature of the same subject-matter or to another subject-matter.

Throughout the description, including the claims, the term "comprising one" or "comprising a" should be understood as being synonymous with the term "comprising at least one", unless otherwise specified. The terms "between" and "from ... to..." should be understood as being inclusive of the limits.

The articles "a", "an" and "the" are used to refer to one or to more than one (i.e., to at least one) of the grammatical object of the article.

It should be noted that in specifying any range of concentration, weight ratio or amount, any particular upper concentration, weight ratio or amount can be associated with any particular lower concentration, weight ratio or amount, respectively.

As used herein, the term "alkyl" means a saturated hydrocarbon radical, which may be straight, branched or cyclic, such as, methyl, ethyl, n-propyl, iso-propyl, n-butyl, sec-butyl, t-butyl, pentyl, n-hexyl, cyclohexyl.

As used herein, the term "derivative" means an ester, ether, diester, diether or any other derivatives from a specific molecule or compound which contains functional groups able of being derivatizes, for instance but not limited to an acid group.

In the following description, references to standard methods refer to the version of the standard method in force on the earliest priority date claimed in the context of the pending application.

In the following description, and unless otherwise provide, the amounts refer to amounts of actives matters, as opposed to amounts "as is", dry amounts, or the like.

The invention firstly relates to an adjuvant composition for herbicides, comprising:
a) at least one surfactant chosen from betaine compounds, preferably from carboxybetaine compounds, sulfobetaines compounds and mixtures thereof, more preferably from carboxybetaine compounds,
b) at least one choline salt,
c) at least one polyol compound, and
d) optionally, a liquid medium.

The invention also relates to an herbicidal composition comprising:
- at least one herbicide,
- at least one adjuvant composition as defined above and as described hereafter in more details, and
- optionally, a liquid medium.

### Betaine compounds

The adjuvant composition according to the invention comprises at least one surfactant selected from betaine compounds.

By "betaine", we refer in the context of the invention to a neutral compound with a positively charged cationic functional group that bears no hydrogen atom, and with a negatively charger functional group, such as a carboxylate group, that is not adjacent to the cationic functional group.

The betaine compound is typically chosen from carboxybetaine compounds sulfobetaine compounds and mixtures thereof.

Carboxybetaines are generally known compounds and include, for example, N-alkyl derivatives of glycine and N-alkyl derivatives of β-alanine, more typically N-alkyl derivatives of dimethyl glycine.

Preferably, carboxybetaine compound of the adjuvant composition of the invention is according to the general formula (I): 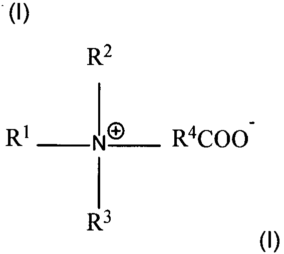 wherein
R¹ is an hydrophobic moiety,
R² and R³ are each independently alkyl, alkenyl, alkoxyalkyl, hydroxyalkyl, hydroxy-terminated poly(oxyalkylene), or alkoxy-terminated poly(oxyalkylene), and
R⁴ is methylene or dimethylene.

Suitable (carboxy)betaine surfactants include, for example, decyl dimethyl betaine, undecyl dimethyl betaine, dodecyl dimethyl betaine, tridecyl dimethyl betaine, tetradecyl dimethyl betaine, coco dimethyl betaine, (C12-C14)alkyl dimethyl betaine, hexadecyl dimethyl betaine, heptadecyl dimethyl betaine, octadecyl dimethyl betaine, dodecylamidopropyl dimethyl betaine, cocoamidopropyl dimethyl betaine, oleylamidopropyl betaine, lauryl dihydroxypropylglycinate, lauryl di(hydroxy-poly(ethoxy))glycinate, β-alanine, cocodimethylbetaine, and mixtures thereof.

Sulfobetaines are generally known compounds. Sulfobetaine may be compounds according to the general formula (II):

R⁵R⁶R⁷N⁺CH₂(CHR⁸)ₓCH₂SO₃⁻ (II)

wherein R⁵ is a C₁-C₄ alkyl or hydroxyalkyl, such as a methyl, ethyl, propyl, hydroxyethyl and hydroxypropyl,
R⁶ is C₆-C₂₂ alkyl, alkenyl, hydroxyalkyl or hydroxyalkenyl,
R⁷ is a C₁-C₄ alkyl or hydroxyalkyl, or a C₆-C₂₂ alkyl, alkenyl, hydroxyalkyl or hydroxyalkenyl,
R⁸ is H or OH,
x is an integer of 0-2,
wherein any two of the groups R⁴-R⁶ may optionally form a ring structure.

Examples of sulfobetaines include and are not limited to: coco dimethyl sulfobetaine, myristyl dimethyl sulfobetaine, palmityl dimethyl sulfobetaine, lauryl dimethyl sulfobetaine, erucamidopropyl hydroxypropyl sulfobetaine.

According to a preferred embodiment, the first surfactant is chosen from carboxybetaines, more preferably from (carboxy)betaine compounds of formula (I) as defined above.

Preferably, R¹ is an alkyl, alkenyl or alkoxyalkyl, each typically having from 4 to 32 carbon atoms per group, wherein the alkyl moiety of the alkoxyalkyl group may optionally be substituted with one or more hydroxyl groups and/or be linked to the nitrogen atom of structure (I) via a divalent oxyalkylene radical of from 1 to 6 oxy(C₂-C₃)alkylene units. More preferably, R¹ is an alkyl or alkoxyalkyl, having from 4 to 32 carbon atoms per group.

Preferably, R² and R³ are each independently (C₁-C₆)alkyl, (C₁-C₆)alkenyl, an alkoxyalkyl group having from 2 to 6 carbon atoms per group, hydroxy(C₁-C₆)alkyl, or R⁹-(OCyH2y)z- wherein R⁹ is H or (C₁-C₆)alkyl, y is, independently for each -(OC_{y}H_{2y})- unit, 2 or 3, and z is an integer of from 1 to 20, more typically from 1 to 10. More preferably, R² and R³ are each independently (C₁-C₆)alkyl, even more preferably (C₁-C₃)alkyl, typically methyl.

According to a preferred embodiment:
- R¹ is (C₄-C₃₂)alkyl or alkoxyalkyl having from 4 to 32 carbon atoms per group,
- R² and R³ are each independently (C₁-C₆)alkyl, and
- R⁴ is methylene or dimethylene.

According to an even preferred embodiment:
- R¹ is (C₄-C₃₂)alkyl, preferably (C₆-C₃₀)alkyl, more preferably (C₈-C₂₂)alkyl, even more preferably (C₁₀-C₁₆)alkyl, and typically (C₁₂-C₁₄)alkyl,
- R² and R³ are each independently (C₁-C₆)alkyl, preferably (C₁-C₃)alkyl, more preferably methyl, and
- R⁴ is methylene.

According to a particularly preferred embodiment, the betaine compound is a mixture of (C₁₂-C₁₄)alkyl dimethyl betaine compounds. In other words, the betaine compound of the first surfactant is a mixture of lauryl dimethyl betaine and myristyl dimethyl betaine. Advantageously, lauryl dimethyl betaine and myristyl dimethyl betaine are present in the adjuvant composition of the invention according to a weight ratio ranging from 10:1 to 1:10, preferably from 10:1 to 1:1, even more preferably from 5:1 to 1:1, typically from 3:1 to 1:1.

Specific examples of betaines compounds particularly adapted to the invention include for example **Agrospec^{®} HT 2009, Geronol^{®} CF/AS 30** or even **Mirataine^{®} BB FLA.**

Preferably, the adjuvant composition of the invention comprises from 50% to 80% by weight, with respect to the total weight of the adjuvant composition, of betaine surfactant(s), preferably of carboxybetaine surfactant(s).

More preferably, the adjuvant composition of the invention comprises from 52.5% to 77.5% by weight of betaine surfactant(s), preferably of carboxybetaine surfactant(s), with respect to the total weight of the adjuvant composition, preferably from 55% to 75% by weight.

### Choline salts

The adjuvant composition of the invention further comprises at least one choline salt.

According to an embodiment, the choline salt(s) are chosen from non-pesticide choline salts.

By "non-pesticide choline salts", we refer to choline salts that do not have a pesticide activity per see, typically when introduced in a composition that is free of pesticide active ingredients. Choline salts having pesticide activity such as 2,4-D choline salt, aminopyralid choline salt, triclopyr choline salt, and the like, or any mixture thereof are therefore excluded from the invention.

Preferably, the choline salt(s) are selected from the group consisting of: choline chloride, choline carbonate, choline sulfate, choline citrate, choline acrylates, choline carboxylates, choline phosphonates, tricholine citrate, tricholine phosphate, choline dihydrogen citrate, choline bitartrate and any combinations thereof.

More preferably, the choline salt(s) are selected from the group consisting of: choline chloride, choline carbonate, choline sulfate, choline citrate and any combinations thereof.

Even more preferably, the choline salt is choline chloride, taken alone or in combination with anyone of choline carbonate, choline sulfate, choline citrate, choline acrylates, choline carboxylates, choline phosphonates, tricholine citrate, tricholine phosphate, choline dihydrogen citrate and choline bitartrate.

Advantageously, the choline salt is choline chloride.

Preferably, the adjuvant composition of the invention comprises from 5% to 30% by weight, of choline salt(s) (preferably of choline chloride), with respect to the total weight of the adjuvant composition, more preferably from 7.5% to 25% by weight, even more preferably from 8% to 22.5% by weight.

### Polyol compounds

The adjuvant composition of the invention further comprises at least one polyol compound.

By "polyol compound", we refer in the context of the invention to a chemical compound comprising at least 2 (two) hydroxyl -OH functions. The polyol may comprise 2, 3, 4, 5 or even more hydroxyl -OH functions.

Advantageously, the polyol compound is chosen from diol and triol compounds, more preferably is a diol.

The polyol compound is typically chosen from the group consisting of:
i) alkanediols,
ii) cycloalkanediols,
iii) aromatic diols,
iv) unsaturated diols,
v) saccharides and polysaccharides,
vi) polyalkylene glycols, and
vii) any combinations thereof.

### Alkanediols

Alkanediols are generally known compounds of formula (III):

CₙH₂ₙ₊₂O₂ **(III)**

with n an integer ranging from 1 to 50.

Preferably, n ranges from 1 to 30, more preferably from 1 to 20, even more preferably from 1 to 10.

Specific examples of alkanediols include ethylene glycol, propylene glycol (or 1,2-propanediol), 1,3-propanediol, 1,4-butanediol, 1,3-butanediol, pentane-1,5-diols or even hexane-1,6-diol.

Advantageously, the alkanediol is chosen from ethylene glycol, propylene glycol, 1,3-propanediol and mixtures thereof. More advantageously, the alkanediol is 1,3-propanediol.

### Cycloalkanediols

Cyclolkanediols are generally known compounds consisting of cyclic compounds containing two hydroxyl groups (-OH) attached to a cycloalkane ring. Cycloalkanediols are compounds of formula (IV):

**CₘH₂ₘ₋₂O₂** **(IV)**

with m an integer ranging from 1 to 50.

Preferably, m ranges from 1 to 30, more preferably from 1 to 20, even more preferably from 1 to 10.

Specific examples of cycloalkanediols include Cyclopentane-1,2-diol, Cyclohexane-1,2-diol, Cyclohexane-1,3-diol and even Cyclohexane-1,4-diol.

### Aromatic diols

Aromatic diols are generally known compounds consisting of compounds containing two hydroxyl groups (-OH) attached to an aromatic ring, such as a benzene ring.

Aromatic diols are compounds of formula (V):

**CₚH₂ₚ₋₆O₂** **(V)**

with p an integer ranging from 1 to 50.

Preferably, p ranges from 1 to 30, more preferably from 1 to 20, even more preferably from 1 to 10.

Specific examples of aromatic diols include Catechol (1,2-Benzenediol), Resorcinol (1,3-Benzenediol), or even Hydroquinone (1,4-Benzenediol).

### Unsaturated diols

Unsaturated diols are generally known compounds consisting of compounds containing two hydroxyl groups (-OH) attached to a carbon chain that includes one or more carbon-carbon double bonds. The presence of double bonds distinguishes them from saturated diols, and notably of alkanediols as defined above.

Specific examples of unsaturated diols include But-2-ene-1,4-diol, 2-Butene-1,2-diol or even 2,5-Hexadiene-1,6-diol.

### (Poly)saccharides

Saccharides, commonly known as carbohydrates, are organic compounds composed of carbon, hydrogen, and oxygen, typically with the general formula C_{q}(H₂O)_{q} (VI), with q an integer ranging from 3 to 50, typically equal to 6 or 12. Saccharides can be classified into simple sugars (monosaccharides) and complex carbohydrates (oligosaccharides and polysaccharides).

Examples of monosaccharides include glucose or fructose. Examples of disaccharides include sucrose (composed of glucose and fructose), or even lactose (composed of glucose and galactose).

According to an embodiment, the polyol is chosen polysaccharides.

Polysaccharides are complex carbohydrates composed of long chains of monosaccharide units linked together by glycosidic bonds. They can be linear or branched and serve various functions, such as energy storage and providing structural support.

Examples of polysaccharides include starch, glycogen, cellulose, chitin but also guar gum.

### Polyalkylene glycols (PAG_{S})

Polyalkylene glycols (PAGs) are a class of polymers formed by the polymerization of alkylene oxide monomers, such as ethylene oxide or propylene oxide. These polymers are characterized by repeating ether linkages in their backbone, typically represented by the general formula (VII):

**-(R⁹-O)ᵣ-** **(VII)**

with R⁹ a C1-C10 alkylene group, and r an integer ranging from 1 to 100.

Examples of polyalkylene glycols include polyethylene glycols or even polypropylene glycols.

According to an embodiment, the polyalkylene glycol is chosen from polyethylene glycols (PEG).

The polyethylene glycol may be linear or branched. Preferably, the polyethylene glycol polymer of the invention is linear.

The polyethylene glycol of the invention may be capped or not capped. Preferably, the polyethylene glycol of the invention is chosen from non-capped polyethylene glycols, designated hereafter as PEG-OH.

By "capped polyethylene glycol", we refer in the context of the invention to PEG polymers whose two hydroxyl -OH terminal groups have been reacted to form -OR terminations with R being an alkyl group having from 1 to 5 carbon atoms, typically with R being a methyl group. Reversely, "non-capped polyethylene glycol polymers", also designated hereafter as PEG-OH, are PEG polymers with two hydroxyl -OH termination groups.

Preferably, the polyethylene glycol has a weight-average molecular weight (M_{w}) superior or equal to 160 g.mol⁻¹. More preferably, the polyethylene glycol has a weight-average molecular weight (M_{w}) ranging from 180 g.mol⁻¹ to 450 g.mol⁻¹, preferably from 185 g.mol⁻¹ to 400 g.mol⁻¹, more preferably from 190 g.mol⁻¹ to 300 g.mol⁻¹, even more preferably from 190 g.mol⁻¹ to 210 g.mol⁻¹.

Mw denotes the weight-average molecular weight and is determined by the size exclusion chromatography (or GPC) technique. The measurement conditions are known to a person skilled in the art. For the organic compounds of the invention, an aqueous mobile phase and a refractometric detector are generally used. Polyethylene glycol (PEG) standards are also generally used to obtain the calibration curve. A person skilled in the art may refer to the work Column Handbook for Size Exclusion Chromatography, Academic Press, ISBN 0-12-76555-7, to determine the GPC measurement conditions.

In the case of PEG-OH, the weight-average molecular weight may also be calculated via the measurement of the hydroxyl number of the PEG. The hydroxyl number of a PEG polymer may for example be measured according to standard method ASTM E 1899 or even EN ISO 4629-2 (in replacement of DIN 53240-2).

Preferably, the PEG-OH polymer has a hydroxyl number, measured according to ASTM E 1899, inferior or equal to 650 mg KOH/g of PEG-OH, more preferably from 150 mg KOH/g to 650 mg KOH/g, even more preferably from 250 mg KOH/g to 650 mg KOH/g, typically from 500 mg KOH/g to 650 mg KOH/g.

The weight-average molecular weight of the PEG-OH polymer may then be calculated using the following formula: $Mw = \frac{2000 \times M \left(KOH\right)}{N \left(OH\right)}$ with:
Mw: the weight-average molecular weight of the PEG-OH (in g.mol⁻¹),
M(KOH): the molecular weight of potassium hydroxide KOH (in g.mol⁻¹), and
N(OH): the hydroxyl number of the PEG-OH (in mg KOH/g of PEG-OH).

Considering the molecular weight of potassium hydroxide KOH as equal to 56.1 g.mol⁻¹, the preceding formula may be simplified as follows: $Mw = \frac{112 200}{N \left(OH\right)}$ with:
Mw: the weight-average molecular weight of the PEG-OH (in g.mol⁻¹), and
N(OH): the hydroxyl number of the PEG-OH (in mg KOH/g of PEG-OH).

According to a preferred embodiment, the polyethylene glycol polymer is chosen polymers of formula (VIII): 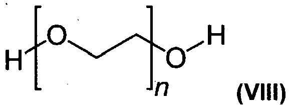 wherein n, representing the average number of ethylene oxide units, is superior to 3 and inferior to 10.

Preferably ranges from 3.5 to 9.5, more preferably from 4 to 7, even more preferably from 4 to 5.

Suitable polyethylene glycol polymer are typically PEG200, PEG300 or even PEG400 polymers. Such polymers are commercially available from The Dow Chemical Company (DOW) under the name of CARBOWAX^{™} polyethylene glycol (PEG) 200, 300 or 400, or from Syensqo under the name Rhodasurf^{®} PEG 200, 300 or 400.

According to a particular embodiment, the solvent is in the form of a mixture of polyethylene glycols having different weight-average molecular weight.

According to a preferred embodiment, the polyol is chosen from alkanediols, polyalkylene glycols and combinations thereof.

According to an even preferred embodiment, the polyol is chosen from 1,3-propanediol and Polyethylene glycols (typically as defined above) and mixtures thereof).

Preferably, the adjuvant composition of the invention comprises from 5% to 30% by weight of polyol(s), notably of diol(s), more preferably from 5% to 25% by weight, even more preferably from 7.5% to 22.5% by weight, with respect to the total weight of the adjuvant composition.

### Liquid medium

According to an embodiment, the adjuvant composition of the invention further comprises a liquid medium.

As used herein, the term *"liquid medium"* refers to a medium that is in the liquid phase at a temperature of 25°C and at a pressure of one atmosphere.

More preferably, the adjuvant composition of the invention is in the form of a dispersion of the above-defined elements (betaine surfactant(s), choline salt(s), and polyol compound(s)) and optionally of some additional additives as defied below in a liquid medium.

The liquid medium may be a non-aqueous liquid medium and/or an aqueous liquid medium.

Advantageously, the adjuvant composition of the invention comprises from 1% to 40% by weight of liquid medium, with respect to the total weight of the adjuvant composition, preferably from 2% to 35% by weight, more preferably from 2% to 20% by weight.

According to an embodiment, the liquid medium comprises at least one aqueous liquid medium and/or a solvent.

By "solvent", we refer in the context of the invention to a liquid substance that is capable of dissolving at least one of the first and second surfactant(s) present in the adjuvant composition of the invention, preferably all the surfactant(s) present in the adjuvant composition of the invention.

### Aqueous liquid medium

As used herein, the terminology "aqueous medium" means a single phase liquid medium that contains more than a trace amount of water, typically, based on 100 pbw of the aqueous medium, more than 0.1 pbw water. Suitable aqueous media more typically comprise, based on 100 pbw of the aqueous medium, greater than about 5 pbw water, even more typically greater than 10 pbw water. In one embodiment, the aqueous emulsion comprises, based on 100 pbw of the aqueous medium, greater than 40 pbw water, more typically, greater than 50 pbw water. The aqueous medium may, optionally, further comprise water soluble or water miscible components dissolved in the aqueous medium. The terminology "water miscible" as used herein means miscible in all proportions with water. Suitable water miscible organic liquids include, for example, (C₁-C₅) alcohols, such as methanol, ethanol, propanol, and (C₁-C₅)polyols, such as glycerol, ethylene glycol, propylene glycol, and diethylene glycol. The composition of the present invention may, optionally, further comprise one or more water insoluble or water immiscible components, such as a water immiscible organic liquid, wherein the combined aqueous medium and water insoluble or water immiscible components form a micro emulsion, or a multi-phase system such as, for example, an emulsion, a suspension or a suspo-emulsion, in which the aqueous medium is in the form of a discontinuous phase dispersed in a continuous phase of the water insoluble or water immiscible component, or, more typically, the water insoluble or water immiscible component is in the form of a discontinuous phase dispersed in a continuous phase of the aqueous medium.

According to a preferred embodiment, the liquid medium is an aqueous liquid medium, more preferably is water.

Advantageously, when present, the aqueous liquid medium, notably water, represents from 1% to 40% by weight, with respect to the total weight of the adjuvant composition, preferably from 2% to 35% by weight, more preferably from 2% to 20% by weight.

### Solvent

According to an embodiment, the adjuvant composition of the invention comprises at least one solvent (or a mixture of solvents). In one embodiment, the solvent is a polar solvent. In another embodiment, the solvent is water-miscible. The solvent may include, but is not limited to, one or a mixture of: a water-miscible glycol ether, a water-miscible polyhydric alcohol (e.g., glycerine or propylene glycol) ether, a water-miscible alcohol, a water-miscible ketone, a water-miscible aldehyde, a water-miscible acetate.

In some embodiments, the solvent comprises at least one of propylene glycol, glycerine or ethylene glycol.

Other solvents (or solvent blends include at least one of the following) include: N-methyl-pyrrolidone (NMP, can be further identified for example with CAS number 872-50-4), diester solvents, propylene carbonate, acetophenone, ethylene glycol butyl ether, diethylene glycol butyl ether, methoxy methyl butanol, propylene glycol methyl ether, dipropylene glycol methyl ether, gamma-butyrolactone, dimethyl formamide (DMF), furfuryl alcohol, tetrahydrofuryl alcohol, neopentyl glycol, hexadiols, hexylene glycol, glycol ether amines, ethylene glycol monoacetate.

According to a preferred embodiment, the solvent is chosen from solvents of formula (IX):

**R¹⁴CONR¹⁵R¹⁶** **(IX)**

wherein:
- R¹⁴ is a linear or branched, saturated aliphatic group, having from 1 to 6 carbon atoms, substituted by one or more functional groups chosen from -OH groups and/or -COOR' groups, wherein R' is a (C₁-C₆)alkyl group, in particular a (C₁-C₄)alkyl group, and more particularly a (C₁-C₂)alkyl group,
- R¹⁵ and R¹⁶, which are identical or different, are a (C₁-C₆)alkyl group, in particular a (C₁-C₄)alkyl group, and more particularly a (C₁-C₂)alkyl group,
- R¹⁴ and R¹⁵ or R¹⁶ may together form a ring, the said ring containing 4 to 6 carbon atoms and optionally substituted by one or more (C₁-C₄)alkyl groups and/or one or more functional groups chosen from -OH groups, -OR' groups, -COOR' groups and -CONR¹⁷R¹⁸ groups, wherein R' is a (C₁-C₆)alkyl group, in particular a (C₁-C₄)alkyl group, and more particularly a (C₁-C₂)alkyl group, and R¹⁷ and R¹⁸, which are identical or different, denote a (C₁-C₆)alkyl group, in particular a (C₁-C₄)alkyl group, and more particularly a (C₁-C₂)alkyl group.

Preferably, the radical R¹⁴ in formula (VI) represents a group having the formula -Z-COOR' in which R' is a methyl group and Z is a linear or branched divalent alkylene group comprising from 1 to 6 carbon atoms, in particular from 2 to 4 carbon atoms.

More preferentially, Z is a linear or branched divalent alkylene group comprising 4 carbon atoms, and even more preferentially Z is a branched divalent alkylene group comprising 4 carbon atoms.

According to a preferred embodiment, the solvent of general formula (VI) is chosen from those of the following general formula (IX-1):

**R'OOC-Z-CONR¹⁵R¹⁶** **(IX-1)**

wherein,
- Z is a divalent (C₁-C₆)alkylene, preferably (C₂-C₅)alkylene, more preferentially (C₄)alkylene, and
- R', R¹⁵ and R¹⁶, identical or different, denote a (C₁-C₆)alkyl, preferably a (C₁-C₄)alkyl, more preferentially a (C₁-C₂)alkyl, and even better a methyl group.

Preferably according to this embodiment, Z in formula (VI-1) is a divalent (C₄)alkylene, more preferably a divalent alkylene group of formula -CH(CH₃)-CH₂-CH₂-.

Preferably according to this embodiment, R', R¹⁵ and R¹⁶, are (C₁-C₄)alkyls, in particular methyl, ethyl, propyl, iso-propyl, n-butyl, s-butyl, tert-butyl. And more preferably R', R¹⁵ and R¹⁶ are identical and notably a (C₁-C₂)alkyl. More advantageously, R', R¹⁵ and R¹⁶, are identical and denote a methyl group.

Preferably, the solvent(s) is (are) chosen from compounds of formula (VI-1), wherein Z is a (C₄)alkylene group, and R', R¹⁵ and R¹⁶ are methyl groups. Very preferably, the ester-amide solvent comprises at least one compound of formula (IX-1), wherein Z is an alkylene group of formula -CH(CH₃)-CH₂-CH₂, and R', R¹⁵ and R¹⁶ are methyl groups.

Advantageously, the solvent comprises, preferably is, methyl-5-(dimethylamino)-2-methyl-5-oxopentanoate.

**Rhodiasolv^{®} Polarclean,** marketed by SYENSQO, is an example of very suitable commercial solvent which can be used in an adjuvant composition in accordance with the invention.

Advantageously, when present, the solvent(s) represents from 0.1 to 10.0%, notably of formula (IX), with respect to the total weight of the adjuvant composition, preferably from 0.1% to 5.0% by weight, more preferably from 0.1% to 2.0 by weight, typically from 0.5% to 2.0% by weight.

According to an embodiment, the liquid medium comprises at least one aqueous liquid medium, preferably water, and optionally at least one solvent.

According to a preferred embodiment, the liquid medium comprises both at least one liquid medium, preferably water, and at least one solvent, preferably of formula (VI-1).

### Additional components

According to an embodiment, the adjuvant composition as described herein may further comprise additional components such as, for example: surfactants different from the above-described betaine surfactants, anti-foaming agents, deposition control agents such as anti-rebound or anti-drift agents.

In one particular embodiment, the herbicidal compositions described herein contain, in addition to the betaine surfactants defined above, an additional surfactant. In one embodiment, said additional surfactant is chosen from a cationic surfactant, an anionic surfactant, a non-ionic surfactant, a zwitterionic surfactant, an amphoteric surfactant and mixtures thereof. This additional surfactant may provide further advantages or synergies in term of costs, and/or bioefficacy, and/or rheology management, and/or environment concerns.

Some non-limiting examples of additional surfactants include: an ethoxylated fatty amine; a fatty amine; an ether carboxylate; an acid or non-acid mono- and di-ester phosphate, optionally polyalkoxylated, and mixtures thereof.

According to an embodiment the composition is substantially free (less than 10% by weight of the total composition, preferably less than 1 %, preferably none) of a humectant selected from polyhydric alcohols, polysaccharide humectants, and mixtures thereof.

The adjuvant composition of the invention may also further comprise pH adjusting agents, notably organic pH adjusting agents such as monoethanol amine or triethanolamine (TEA), and/or inorganic bases or acids, to get desired pH of the final formulation.

The adjuvant composition of the invention may also further comprise impurities resulting from the manufacturing process of the surfactant(s). These impurities are typically introduced in the adjuvant composition of the invention as a mixture with the surfactant(s). Alkali metal salts such as potassium chloride or sodium chloride are typical examples of impurities present with surfactant(s).

Ammonium sulfate may also be a useful adjuvant compound to achieve water conditioning effects. As a matter of fact, ammonium sulfate is known to reduce the effect of the hard water ions (especially calcium and magnesium ions) on the efficacy of some pesticides such as weak acid herbicides (like glyphosate).

Advantageously, the adjuvant composition of the invention comprises from 0% to 10% by weight of additional component(s), with respect to the total weight of the adjuvant composition, preferably from 0.1% to 5% by weight, more preferably from 0.25% to 2% by weight.

### The adjuvant composition

According to an embodiment, the adjuvant composition of the invention comprises, preferably consists essentially of, or even consists of:
- from 50% to 80% by weight of betaine(s), notably of carboxybetaine(s),
- from 5 to 30% by weight of choline salt(s),
- from 5% to 30% by weight of polyol(s),
- optionally, up to 40% by weight of a liquid medium, and
- optionally, up to 10% by weight of additional component(s), notably of surfactant(s).

According to a preferred embodiment, the adjuvant composition of the invention comprises, preferably consists essentially of, or even consists of:
- from 52.5% to 77.5% by weight of betaine(s), notably of carboxybetaine(s),
- from 7.5 to 25% by weight of choline salt(s),
- from 5% to 25% by weight of polyol(s),
- optionally, from 2% to 35% by weight of a liquid medium, and
- optionally, from 0.1% to 5% by weight of additional component(s), notably of surfactant(s).

According to an even preferred embodiment, the adjuvant composition of the invention comprises, preferably consists essentially of, or even consists of:
- from 55% to 75% by weight of betaine(s), notably of carboxybetaine(s),
- from 8 to 25% by weight of choline salt(s),
- from 5% to 22.5% by weight of polyol(s),
- optionally, from 2% to 20% by weight of a liquid medium, and
- optionally, from 0.25% to 2% by weight of additional component(s), notably of surfactant(s).

According to an embodiment, the adjuvant composition is an agricultural adjuvant composition. In particular, according to this embodiment, the adjuvant composition according to the invention is particularly adapted to be used in agrochemical (agriculture) domain, notably in combination with herbicide(s).

The adjuvant composition of the invention can be prepared by mixing their different constituents with moderate stirring, at a temperature ranging from 15° C. to 60° C. In one embodiment, the temperature is ambient temperature (15-30°C.).

The adjuvant composition of the invention is advantageous in that it remains stable during a prolonged period of storage, notably under severe conditions of storage.

Preferably, the adjuvant composition of the invention is stable after at least 2 weeks of storage at a temperature equal to 25°C. Preferably, the adjuvant composition of the invention is stable after at least 2 weeks of storage at a temperature of less than 0°C, typically less than -10°C, for example of less than or equal to -16°C. Preferably, the adjuvant composition of the invention is stable after at least 2 weeks of storage at a temperature of more than 30°C, typically of more than -40°C, for example of more than or equal to 56°C. Preferably, the adjuvant composition of the invention is stable after at least 2 weeks of storage while submitted to freeze-thaw (F/T) cycles of 24 hours.

In this context, storage stability means minimal or no crystal formation during storage. In another embodiment, stability means minimal or no phase separation during storage.

### The herbicide(s)

The herbicide is preferably chosen from aminophosphate, aminophosphate salts, aminophosphonate, aminophosphonate salts, and mixtures thereof. More preferably, the herbicide is chosen from glufosinate, glufosinate salts, glyphosate, glyphosate salts, and mixtures thereof.

Glyphosate refers to N(phosphonomethyl)glycine. Gluphosinate refers to 4-[hydroxy(riiethyl)phosphinoyl]-DL-homoalanine.

In the case that the herbicide is glyphosate or the salt thereof, the salt may be the potassium salt of glyphosate, the sodium salt of glyphosate, the isopropyl amine salt of glyphosate, the ammonium salt of glyphosate, combination of the potassium salt of glyphosate and the isopropyl amine salt of glyphosate, or combination of the potassium salt of glyphosate and the ammonium salt of glyphosate.

The glyphosate or the salt thereof may be present in an amount of from 5 wt% to 90 wt%, preferably from 20 wt% to 60 wt%, more preferably, 30 wt% to 50 wt%, with respect to the total weight of the herbicidal composition.

In a preferred embodiment, the herbicide is a glufosinate or salt thereof which may be represented by the general formula (VII): 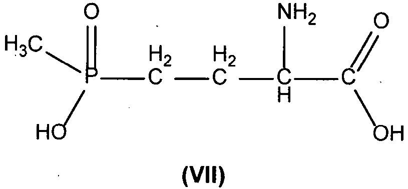 in the form of the racemate or the L enantiomer, lower alkyl esters thereof or salts thereof with acids or bases.

The compounds of the general formula (VII) include an asymmetric carbon atom. The L enantiomer is regarded as the biologically active isomer. The general formula (VII) hence embraces all stereoisomers and mixtures thereof, particularly the racemate, and the biologically active enantiomer in each case. Examples of active ingredients of the formula (VII) are as follows: glufosinate and its ammonium salt in racemic form,, i.e., 2-amino-4-[hydroxy(methyl)phosphinoyl]butanoic acid and its ammonium salt, the L-enantiomer of glufosinate and its ammonium salt, bilanafos/bialaphos, i.e., L-2-amino-4-[hydroxy( methyl)phosphinoyl]butanoyl-L-ala111inyl-L-alanine and its sodium salt.

According to a preferred embodiment, the herbicide comprises, preferably is, an ammonium salt of glufosinate.

In the case that the herbicide is a glufosinate or the salt thereof, the glufosinate active ingredient may be present in an amount of from 1 wt% to 90 wt%, preferably from 5 wt% to 50 wt%, more preferably from 20 wt% to 40 wt%, with respect to the total weight of the composition.

According to an embodiment, the herbicide is present in the herbicidal composition at equal or greater than 280 g/L, preferably at equal or greater than 350 g/L, more preferably at equal or greater than 400 g/L, even more preferably at equal or greater than 420 g/L.

According to a preferred embodiment, the herbicide is present in the herbicidal composition at a content ranging 280 g/L to 750 g/L, preferably ranging from 350 g/L to 500 g/L, more preferably ranging from 400 g/L to 450 g/L.

According to a particular embodiment, the herbicide composition of the invention further comprises at least one further herbicide (that is different from the above-defined herbicides). A further herbicide that could be associated with the herbicide defined above is typically 2,4-D choline salt.

Preferably, still according to this embodiment, the total amount of further herbicides in the composition ranges from 1.0% to 1.5% by weight, with respect to the total weight of the herbicide composition, preferably from 1.0% to 1.25% by weight.

### The herbicidal composition

According to an embodiment, the herbicidal composition of the invention comprises, preferably consists essentially of, or even consists of:
- from 1% to 90% by weight of herbicide(s), preferably chosen from glufosinate, glufosinate salts, glyphosate, glyphosate salts, and mixtures thereof, more preferably chosen from glufosinate, glufosinate salts and mixtures thereof,
- from 10% to 99% by weight of an at least one adjuvant composition according to the invention, and
- optionally, up to 10% by weight of a liquid medium (that is different from the liquid medium that may eventually be present in the adjuvant composition.

According to a preferred embodiment, the herbicidal composition of the invention comprises, preferably consists essentially of, or even consists of:
- from 5% to 60% by weight of herbicide(s), preferably chosen from glufosinate, glufosinate salts, glyphosate, glyphosate salts, and mixtures thereof,
- from 40% to 95% by weight of an at least one adjuvant composition according to the invention, and
- optionally, up to 10% by weight of a liquid medium (that is different from the liquid medium that may eventually be present in the adjuvant composition.

According to an even preferred embodiment, the herbicidal composition of the invention comprises, preferably consists essentially of, or even consists of:
- from 20% to 50% by weight of herbicide(s), preferably chosen from glufosinate, glufosinate salts, glyphosate, glyphosate salts, and mixtures thereof,
- from 50% to 80% by weight of an at least one adjuvant composition according to the invention, and
- optionally, up to 10% by weight of a liquid medium (that is different from the liquid medium that may eventually be present in the adjuvant composition.

According to an embodiment, the herbicidal composition does not comprise further liquid medium that the one already present in the adjuvant composition.

According to another embodiment, the herbicidal composition further comprises an additional liquid medium that is distinct from the liquid medium already present in the adjuvant composition.

The herbicidal composition according to the invention can be prepared by mixing their different constituents with moderate stirring, at a temperature ranging from 15°C to 60°C. In one embodiment, the temperature is ambient temperature (15-30°C).

According to an embodiment, the adjuvant composition or a part thereof is added during neutralization of the aminophophate or aminophosphonate salts. The remaining components can be added afterwards.

The herbicidal compositions of invention are characterized by at least one of the following properties: low temperature stability, bioefficacy, and low viscosity. The adjuvant composition of invention can protect certain concentrated water-soluble liquid herbicide formulations from instability at low storage temperatures when compared to the same formulations free from said adjuvant composition. The adjuvant composition as described herein can protect certain concentrated water-soluble liquid herbicide formulations from instability at low storage temperatures when compared to the same formulations free from said adjuvant composition.

In one embodiment, the term Bioavailability or bioenhancing (BE) activity is defined as "an herbicide (or pesticide) or nutrient at a lower amount (dosage level) which in combination with an adjuvant provides more availability of the herbicide thereby reducing the application rate of the herbicide or nutrient resulting in enhanced bioefficacy of the said herbicide. In such instance, the adjuvant, thus, enhances the bioefficacy of the herbicide when introduced into the same herbicidal composition.

In another embodiment, the herbicidal composition of the invention increases the bioefficacy of certain herbicides contained in such herbicidal composition. In other words, the adjuvant composition according to the invention, acting synergistically, produce a low application rate formulation (versus a composition without such adjuvant ingredients). For example, in one embodiment, the adjuvant composition as described herein enhance the bio-efficacy of the herbicide such that lower amounts are needed (i.e., lower application rate) versus a herbicide composition without such adjuvant mixture.

In practice, similar ingredients are added to the spray mixture separately, at much higher rates. Using the adjuvant blend components in one spray formulation, at an applicable spray rate, provides a convenient and time-saving combination for farmers. As described herein, in one embodiment, the adjuvant composition increases spray retention, and/or prevents pesticide antagonism from salts in the spray water, and/or enhances leaf penetration by providing a lipophilic and hydrophilic environment. In one embodiment, the effective amount of herbicide is about 1 % of the spray mixture volume. In one embodiment, the effective amount of herbicide means about 0.5% of the spray mixture volume. In one embodiment, the effective amount of herbicide means about 2% of the spray mixture volume. In one embodiment, the effective amount of herbicide means about 1.0% of the spray mixture volume. In one embodiment, the effective amount of herbicide means about 0.75% of the spray mixture volume.

In one embodiment, the herbicidal compositions as described herein maintain a viscosity of less than 400 Centipoise (cP) at room temperature, typically at a temperature ranging from 20°C to 25°C.

In one embodiment, the herbicidal composition as described herein exhibits no crystallization at a temperature at or less than 20°C. In one embodiment, the herbicidal composition as described herein exhibits no crystallization at a temperature at or less than 15°C. In one embodiment, the herbicidal composition as described herein exhibits no crystallization at a temperature at or less than 10°C. In one embodiment, the herbicidal composition as described herein exhibits no crystallization at a temperature at or less than 5°C. In one embodiment, the herbicidal composition as described herein exhibits no crystallization at a temperature at or less than 0°C. In one embodiment, the herbicidal composition as described herein exhibits no crystallization at a temperature at or less than - 5°C. In one embodiment, the herbicidal composition as described herein exhibits no crystallization at a temperature at or less than -10°C. In one embodiment, the herbicidal composition as described herein exhibits no crystallization at a temperature at or less than -16°C.

Use of the adjuvant composition of the invention allows for large-scale production of highly concentrated water-soluble herbicide salt formulations. Depending on the specific nature of the herbicide salt employed and their relative ratios, it is possible to load the herbicidal formulation with higher concentrations of the active ingredient salts than are currently commercially marketed. Higher active ingredient loadings are favored since it reduces transportation and warehousing costs and allows each package to treat more surface area.

In some embodiments, the composition is stable at a temperature of equal or less than 10°C, typically equal or less than 5°C, or equal or less than 2°C, even more typically equal or less than 0°C. In other embodiments, the composition is stable at a temperature of equal or less than -2°C, typically equal or less than - 5°C, equal or less than -10°C, even more typically equal or less than -15°C. low temperature.

The herbicidal compositions of the invention are also advantageous in that they overcome at least parts of the drawbacks of classic high load compositions.

High load compositions are usually associated with foamability issues resulting in the formation of a resistant and durable foam during pouring and dilution steps. This is not the case of the herbicidal composition of the invention whose foamability is significantly reduced and which the durability of the foam is significantly reduced, compared to high load herbicidal compositions of the prior art.

Further, high load compositions are also associated with drift issues. As used herein, the term "drift" refers to off-target movement of droplets of a pesticide composition that is applied to a target pest or environment for the pest. Spray applied compositions typically exhibit decreasing tendency to drift with decreasing relative amount, typically expressed as a volume percentage of total spray applied droplet volume, of small size spray droplets, that is, spray droplets having a droplet size below a given value, typically, a droplet size of less than 150 micrometers ("µm"). Spray drift of pesticides can have undesirable consequences, such as for example, unintended contact of phytotoxic pesticides with non-pest plants, such as crops or ornamental plants, with damage to such non-pest plants. This is not the case of the herbicidal composition of the invention whose drift is significantly reduced, compared to high load herbicidal compositions of the prior art.

### Applications and uses

The adjuvant composition of the invention can be advantageously used in agrochemicals, in particular for preparing agrochemical formulations.

The herbicidal composition of the invention can be thus used to treat plants, normally after diluting with water. The diluted composition can be applied onto a field by any appropriate mean. The dilution, and the application onto the field, can be for example such that the amount of herbicide active ingredient, preferably of glufosinate ammonium salt, is of from 800 g/ha to 3100 g/ha.

In another aspect, described herein is method for regulating plant growth comprising contacting an herbicidal composition as defined above, with a plant.

In another aspect, described is the use of an herbicidal composition as defined above for spray applying to a plant.

According to an embodiment, the adjuvant composition is used:
- increase the activity of an agriculturally active ingredient, notably as defined above, and/or
- to reduce the use rate of an agriculturally active ingredient, and/or
- to increase the wettability of an agriculturally active ingredient, and/or
- to increase the penetrability of an agricultural active ingredient

The invention finally relates to method for regulating plant growth, said method comprising contacting a herbicidal composition of the invention (as defined above) with a plant.

### EXAMPLES

In the following examples, and unless otherwise explicitly stated, contents are in given in percentages by weight, with respect to the total weight of the composition.

### Materials & Methods

The following compositions are prepared from:
- **Carboxybetaine:** a mixture of C12 and C14 alkyl dimethyl betaines (30% by weight of actives), commercially available from SYENSQO under the name **Aghrospec^{®} HT 2009;**
- **Choline salt:** choline chloride as a 75% by weight solution (CAS no.: 67-48-1), commercially available from Eastman Chemical Company under the name Eastman^{™} Choline Chloride 75 Feed;
- **Polyol 1:** polyethylene glycol with a weight-average molecular weight equal to 200 g.mol⁻¹ (CAS no.: 25322-68-3), commercially available from The Dow Chemical Company (DOW) under the name of CARBOWAX^{™} polyethylene glycol (PEG) 200;
- **Polyol 2:** 1,3-propanediol (CAS no: 504-63-2), commercially available from DuPont Tate & Lyle Bio Products Company under the name SUSTERRA^{®} Propanediol,
- **Surfactant:** 2,4;7,9-tetramethyl-5-decyne-4,7-diol (CAS no. :126-86-3), commercially available from Evonik Industries under the name Surfynol^{®} 104PG30,
- **Herbicide:** 50 wt.% glufosinate ammonium solution prepared from 95 wt.% technical grade of glufosinate ammonium.

The properties of the herbicidal compositions were compared to those of the following commercial product: **Liberty^{®} 280 SL,** commercially available from BASF and corresponding to a 280 g/L glufosinate-ammonium herbicide solution. In the following examples, the amounts are amounts of actives matters, as opposed to amounts "as is", dry amounts, or the like, unless otherwise provided. This does not apply to herbicides for which the amount is the amount of the commercial solution as defined above.

The properties of the compositions have been evaluated according to the following protocols:
- **initial appearance:** the initial appearance of the compositions is right after they preparation. Their color and flowability are notably observed.
- **storage stability:** the appearance of the compositions after a prolonged period of storage in specific conditions is observed and then compared to their appearance before storage. The appearance of the compositions is notably observed after 2 weeks of storage at room temperature, at 54°C or even at -16°C. The behavior of the compositions after freeze-thaw (F/T) cycles (of 24 hours) has also been monitored for 2 weeks.
- **drift control:** the herbicidal compositions to be tested were previously diluted with 342 ppm hard water in a 2L bottle. The factor of dilution for each sample is specified below as the "Rate (%V/V)" corresponding to the volume percentage of the starting herbicidal composition in the sample to be tested. The Rate (%V/V) is typically equal to 1.5% for 280 g/L glufosinate formulation and 1% for 420 g/L glufosinate formulation. The drift control properties of the samples thus prepared were then evaluated using a SYMPATEC Helos LASER equipped with R7 lens and AIXR11004 nozzle with the operation pressure of 40 psi and 12 inch measurement distance from the nozzle tip to the laser beam. More particularly, the 2L pre-mixed sample bottle was attached to the SYMPATEC Helos LASER equipment, and the pre-mixed sample was then sprayed through AIXR11004 nozzle. The mean particle size, the in-term volume mean diameter (VMD in micrometer) and percentage of the total volume of the formulation whose droplet size is inferior to 150 µm were measured using SYMPATEC Helos LASER.
- **foamability:** the herbicidal compositions to be tested was introduced into a dry clean 100mL graduated cylinder containing 342 ppm water. The amount of herbicidal composition poured in the cylinder was such that the factor of dilution was equal to 1% V/V, with respect to the total volume of diluted composition. The mixture was gently inverted (flip over and flip back) 10 times to create foaming, the initial foam height was measured in centimeters, and for every 15 minutes for up to 120 minutes.

### EXAMPLE 1 - preparation & evaluation of 280 g/L ammonium-glufosinate compositions

### 1.1. Preparation and evaluation of adjuvant compositions

Adjuvant compositions **A1, A2** and **A3** according to the invention have been prepared by simple mixing all the components with overhead stirrer.

The composition of adjuvant compositions **A1, A2** and **A3 is** given in table 1 below:

**Table 1**

| | **A1** | **A2** | **A3** |
|---|---|---|---|
| **Carboxybetaines** (wt.%) | 56.17 | 70.21 | 55.56 |
| **Choline salt** (wt.%) | 20.06 | 10.03 | 18.52 |
| **Polyol 1** (wt.%) | 20.06 | 10.03 | - |
| **Polyol 2** (wt.%) | - | - | 18.52 |
| **Surfactant** (wt. %) | 0.4 | 0.4 | 0.4 |
| **Water** (wt.%) | 3.31 | 9.33 | 7.04 |

The appearance of the adjuvant compositions **A1, A2** and **A3** (initial and after storage) has then been evaluated. The results are given in table 2 below:

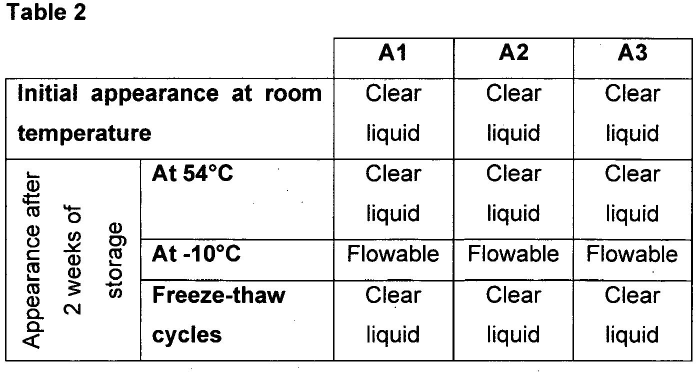

We observe that the adjuvant compositions have clear aspect, and remain stable, even after 2 weeks of storage under severe conditions.

### 1.2. Preparation of herbicidal compositions (Built-in adjuvated herbicide formulations)

Herbicidal compositions **C1, C2** and **C3** according to the invention have been respectively prepared from the adjuvant compositions **A1, A2** and **A3** prepared above. In particular, the herbicidal compositions according to the following protocol: the 50wt% herbicidal solution was mixed with the adjuvant composition using overhead stirrer.

The composition of the herbicide compositions **C1, C2** and **C3** is given in table 3 below:

**Table 3**

| | **C1** | **C2** | **C3** |
|---|---|---|---|
| **Herbicide, 50% solution** (wt.%) | 50.15 | 50.15 | 50.15 |
| **A1** (wt.%) | 48.95 | - | - |
| **A2** (wt.%) | - | 48.95 | - |
| **A3** (wt.%) | - | - | 48.95 |

### 1.3. Appearance and storage stability of the herbicidal compositions

The appearance of the herbicide compositions C1, C2 and C3 (initial and after storage) has then been evaluated. The results are given in table 4 below:

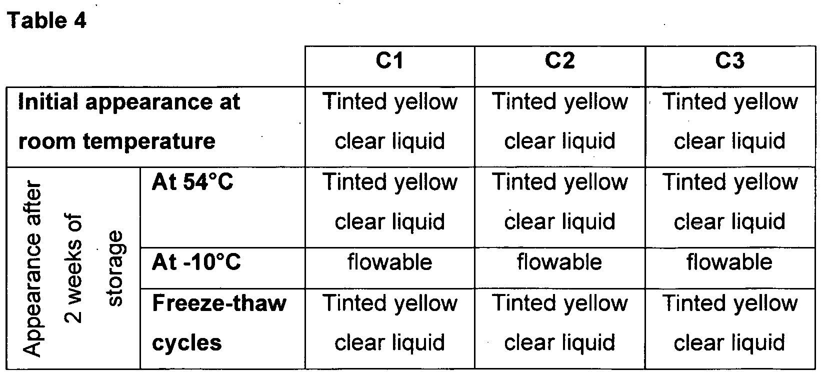

We observe that the herbicidal compositions have a clear an liquid aspect right, and remain stable, even after 2 weeks of storage under severe conditions.

### 1.4. Drift reduction properties of the herbicidal compositions

The drift control ability of the herbicidal compositions **C1** and **C3** (taken alone or in combination with another active ingredient) has been measured according to above-detailed protocol, and compared to those of the commercially available solutions **Liberty^{®}** 280 SL (commercialized by BAYER).

The results are given in table 5 below:

**Table 5**

| | **Rate (%V/V)** | **VMD (in µm)** | **Vol. < 150 µm (in %)** |
|---|---|---|---|
| **C1** | 1.5 | 319.5 | 21.04 |
| **C3** | 1.5 | 325.99 | 20.22 |
| **Liberty 280 SL** | 1.5 | 294.39 | 25.94 |

| | | | |
|---|---|---|---|
| *VMD, for Volume Mean Diameter, expressed in µm **percentage of the total volume of the formulation whose droplet size is inferior to 150 µm | | | |

We observe that the volume mean diameter is significantly increased in the context of the herbicidal compositions of the invention, when compared to **Liberty^{®}** 280 SL formulation. Also, the % of the **C1** and **C2** formulations with a droplet size of less than 150 µm is reduced, compared to the Liberty@ 280 SL formulation.

These values demonstrate that compositions **C1** and **C2** of the invention have an improved drift control ability, compared to the **Liberty^{®}** 280 SLformulation.

### 1.5. Foamability the herbicidal compositions

The formability of herbicidal composition **C1** according to the invention has been measured according to the above-detailed protocol and compared to that of Liberty^{®} 280 SL commercial solution.

The results are given in table 6 below:

**Table 6**

| *Time* | **Liberty^{®} 280 SL** (foam height, cm) | **C1** (foam height, cm) |
|---|---|---|
| 0 | 7.1 | 5.4 |
| **45 min** | 6.8 | 0.3 |
| **60 min** | 6.8 | 0.1 |
| **90 min** | 6.8 | 0 |
| **2 hours** | 6.8 | 0 |

We observe that the height of foam generated with composition C1 of the invention is significantly reduced, with respect to the commercial solution Liberty^{®} 280 SL. Further, the foam falls apart faster in the context of composition C1, when compared to Liberty^{®} 280 SL.

### EXAMPLE 2 - preparation & evaluation of 420 g/L ammonium-glufosinate compositions

### 2.1. Preparation and evaluation of adjuvant compositions

Adjuvant compositions **A4** to **A6** have been prepared by simple mixing all the components with overhead stirrer.

The composition of the adjuvant compositions **A4** to **A6** is given in table 7 below:

**Table 7**

| | **A4** | **A5** | **A6** |
|---|---|---|---|
| **Carboxybetaines** (wt.%) | 55.56 | 74.07 | 74.07 |
| **Choline salt** (wt.%) | 18.52 | 9.26 | 9.26 |
| **Polyol 1** (wt.%) | 18.52 | 9.26 | - |
| **Polyol 2** (wt.%) | - | - | 9.26 |
| **Surfactant** (wt. %) | 0.37 | 0.37 | 0.37 |
| **Water** (wt.%) | 7.04 | 7.04 | 7.04 |

Adjuvant compositions **A4, A5** and **A6** are according to the invention.

The appearance of the adjuvant compositions **A4** to **A6** (initial and after storage) has then been evaluated. The results are given in table 8 below:

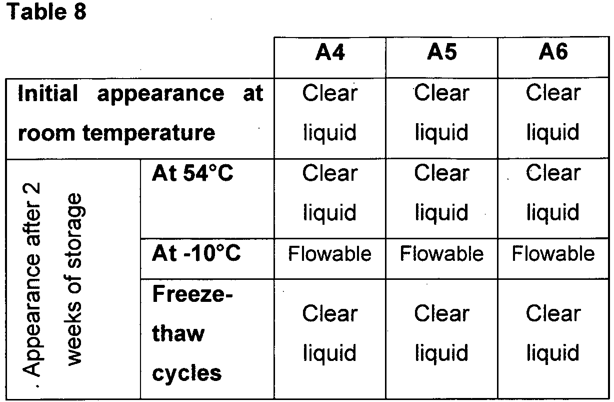

We observe that the adjuvant compositions have clear aspect, and remain stable, even after 2 weeks of storage under severe conditions.

### 2.2. Preparation of herbicidal compositions (Built-in adjuvated herbicide formulations)

Herbicidal compositions **C4** to **C6** according have been respectively prepared from the adjuvant compositions **A4** to **A6** prepared above. In particular, the herbicidal compositions according to the following protocol: the 50wt% herbicidal solution was mixed with the adjuvant composition using overhead stirrer.

The composition of the herbicide compositions **C4** to **C6** is given in table 9 below:

**Table 9**

| | **C4** | **C5** | **C6** |
|---|---|---|---|
| **Herbicide, 50% solution** (wt.%) | 73 | 73 | 73 |
| **A4** (wt.%) | 27 | - | - |
| **A5** (wt.%) | - | 27 | - |
| **A6** (wt.%) | - | - | 27 |

| | | | |
|---|---|---|---|
| Compositions **C4** to **C6** are according to the invention. | | | |

### 2.3. Appearance and storage stability of the herbicidal compositions

The appearance of the herbicide compositions **C4** to **C6** (initial and after storage) has then been evaluated. The results are given in table 4 below:

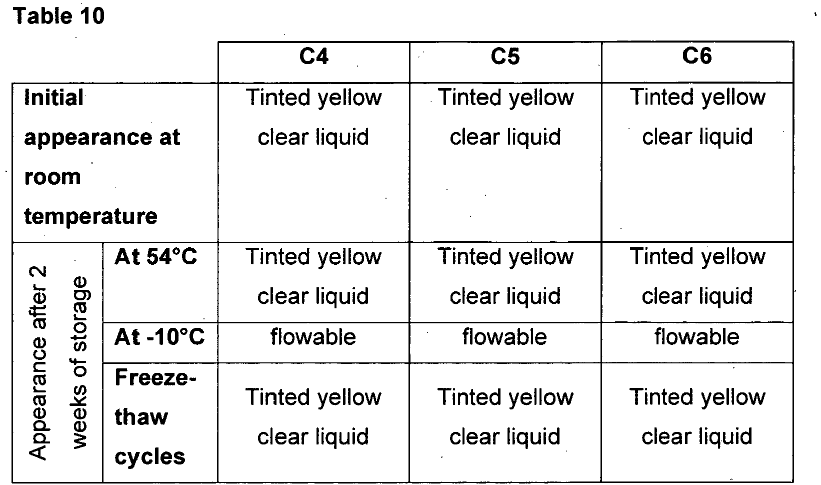

We observe that the herbicidal compositions have a clear and liquid aspect right after their preparation, and remain stable, even after 2 weeks of storage under severe conditions.

### 2.4. Drift reduction properties of the herbicidal compositions

The drift control ability of the herbicidal compositions C4, C6 (taken alone or in combination with another active ingredient) has been measured according to above-detailed protocol, and compared to those of the commercially available solutions Liberty@ 280 SL (commercialized by BAYER).

The results are given in table 11 below:

**Table 11**

| | **Rate (%V/V)** | **VMD (in µm)** | **Vol. < 150 µm (in %)** |
|---|---|---|---|
| **C4** | 1 | 406.08 | 11.18 |
| **C6** | 1 | 389.31 | 12.9 |
| **Liberty 280 SL** | 1.5 | 294.39 | 25.94 |

| | | | |
|---|---|---|---|
| *VMD, for Volume Mean Diameter, expressed in µm **percentage of the total volume of the formulation whose droplet size is inferior to 150 µm | | | |

We observe that the volume mean diameter is significantly increased in the context of the herbicidal compositions C4 and C6 of the invention, when compared to **Liberty^{®}** 280 SL formulation. Also, the volume % of the C4 and C6 formulations with a droplet size of less than 150 µm is significantly reduced, compared to the Liberty^{®} 280 SL formulation.

These values demonstrate that compositions C4 and C6 of the invention have an improved drift control ability, compared to the Liberty^{®} 280 SL formulation (despite their higher active concentration).

### 2.5. Foamability the herbicidal compositions

The formability of herbicidal composition C4 according to the invention has been measured according to the above-detailed protocol and compared to those of Liberty^{®} 280 SL commercial solution.

The results are given in table 6 below:

**Table 12**

| *Time* | **Liberty^{®} 280 SL** (foam height, cm) | **C4** (foam height, cm) |
|---|---|---|
| **0** | 7.1 | 4.4 |
| **45 min** | 6.8 | 3.1 |
| **60 min** | 6.8 | 1.4 |
| **90 min** | 6.8 | 0.4 |
| **2 hours** | 6.8 | 0.1 |

We observe that the height of foam generated with composition C4 of the invention is significantly reduced, with respect to the commercial solution Liberty^{®} 280 SL. Further, the foam falls apart faster in the context of composition C4, when compared to Liberty@ 280 SL.

Therefore, and despite its very high load, composition C4 of the invention has a reduced tendency to foam; compared to Liberty^{®} 280 SL.

## Claims

1. An adjuvant composition for herbicides, said composition comprising:
a) at least one surfactant chosen from betaine compounds, preferably from carboxybetaine compounds, sulfobetaines compounds and mixtures thereof, more preferably from carboxybetaine compounds,
b) at least one choline salt,
c) at least one polyol compound, and
d) optionally, a liquid medium.

2. The adjuvant composition according to claim 1, wherein the surfactant a) is chosen from carboxybetaine compounds, preferably from alkyl dimethyl betaine compounds, more preferably from (C₄-C₃₂)-alkyl dimethyl betaine compounds, even more preferably from (C₄-C₃₂)-alkyl dimethyl betaine compounds

3. The adjuvant composition according to claim 1 or 2, wherein the surfactant a) is a mixture of lauryl dimethyl betaine and myristyl dimethyl betaine.

4. The adjuvant composition according to any of the preceding claims, wherein the choline salt is chosen from the group consisting of: choline chloride, choline carbonate, choline sulfate, choline citrate, choline acrylates, choline carboxylates, choline phosphonates, tricholine citrate, tricholine phosphate, choline dihydrogen citrate, choline bitartrate and any mixtures thereof, preferably is choline chloride.

5. The adjuvant composition according to any of the preceding claims, wherein the poyol compound is chosen the group consisting of:
- alkanediols,
- cycloalkanediols,
- aromatic diols,
- unsaturated diols,
- saccharides and polysaccharides,
- polyalkylene glycol polymers, and
- mixtures thereof.

6. The adjuvant composition according to any of the preceding claims, wherein the polyol is chosen from alkanediols, preferably from the group consisting of: ethylene glycol, propylene glycol, 1,3-propanediol and mixtures thereof.

7. The adjuvant composition according to any of claims 1 to 5, wherein the polyol is chosen from polyalkylene glycols, preferably from polyethelene glycols.

8. The adjuvant composition according to the preceding claim, wherein the polyol is selected from polyethylene glycol polymers with a weight-average molecular weight superior or equal to 160 g.mol⁻¹.

9. An herbicidal composition comprising:
- at least one herbicide,
- at least one adjuvant composition according to any of the preceding claims, and
- optionally, a liquid medium.

10. The herbicidal composition according to claim 9, wherein the herbicide is chosen from aminophosphate or aminophosphonate ammonium salts, preferably from ammonium glyphosate or glufosinate salts, more preferably from ammonium glufosinate salts.

11. The herbicidal composition according to claim 9 or 10, wherein the herbicide is present at equal or greater than 280 g/L, preferably at equal or greater than 350 g/L, more preferably at equal or greater than 400 g/L, typically at equal or greater than 420 g/L.

12. A method of preparing a herbicidal composition according to any of claims 9 to 11, said method comprising putting in contact and mixing at least one herbicide, at least one adjuvant composition according to any of claims 1 to 11, and optionally a liquid medium.

13. Use of an adjuvant composition according to any one of claims 1 to 8 to increase the activity of an agriculturally active ingredient and/or to reduce the use rate of an agriculturally active ingredient.

14. The use according to claim 13 to increase the wettability of an agriculturally active ingredient and/or increase the penetrability of an agricultural active ingredient

15. A method for regulating plant growth comprising contacting a herbicidal composition according to any of claims 9 to 11 with a plant.
